(19) Europäisches Patentamt
European Patent Office
Office européen des brevets

(11) Veröffentlichungsnummer: **0 005 787**
**B1**

(12) # EUROPÄISCHE PATENTSCHRIFT

(45) Veröffentlichungstag der Patentschrift: **29.04.81**

(21) Anmeldenummer: **79101554.8**

(22) Anmeldetag: **22.05.79**

(51) Int. Cl.³: **C 08 G 77/10, C 08 G 77/20**

(54) **Verfahren zur Herstellung von SiC-gebundene Vinylgruppen enthaltenden Organopolysiloxanharzen.**

(30) Priorität: **26.05.78 DE 2823118**

(43) Veröffentlichungstag der Anmeldung:
**12.12.79 Patentblatt 79/25**

(45) Bekanntmachung des Hinweises auf die Patenterteilung:
**29.04.81 Patentblatt 81/17**

(84) Benannte Vertragsstaaten:
**BE DE FR GB IT NL**

(56) Entgegenhaltungen:
**DD - A - 25 090**
**DD - A - 100 009**
**FR - E - 79 490**
**US - A - 3 546 156**
**US - A - 3 903 047**

(73) Patentinhaber: **WACKER-CHEMIE GMBH**
**Prinzregentenstrasse 22**
**D-8000 München 22 (DE)**

(72) Erfinder: **August, Peter, Dr.**
**Fichtenweg 8f**
**D-2105 Seevetal 4 (DE)**
Erfinder: **Primas, Willi**
**Waltingerstrasse 6**
**D-8346 Simbach/Inn (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

EP 0 005 787 B1

# Verfahren zur Herstellung von SiC-gebundene Vinylgruppen enthaltenden Organopolysiloxanharzen

Beispielsweise aus US—PS 35 46 156, ausgegeben: 8. Dezember 1970, J. Baronnier et al., assignors to Rhone-Poulenc, wobei diese Patentschrift der FR—PS 15 68 812 entspricht, ist es bekannt, SiC-gebundene Vinylgruppen enthaltende Organopolysiloxanharze herzustellen. Bei diesem bekannten Verfahren werden Silane mit einem Gehalt an verschiedenen organischen Resten und mit verschiedener Funktionalität in einem bestimmten Bereich hydrolysiert, und es werden Organopolysiloxanharze erhalten, die praktisch frei von Si-gebundenen Hydroxylgruppen und deshalb sehr lagerbeständig und nach dem Härten frei von Hohlräumen sind. Gegenüber diesem Verfahren hat das erfindungsgemäße Verfahren den Vorteil, daß die danach hergestellten Harze nicht mindestens 25 Molprozent an den verhältnismäßig schwer zugänglichen Diphenylsiloxaneinheiten enthalten müssen, um fließfähig zu sein. Gegenüber dem bekannten Verfahren hat das erfindungsgemäße Verfahren außerdem mindestens den weiteren Vorteil, daß nicht schon bei der Hydrolyse zumindest eines großen Teils der für die Herstellung des Organopolysiloxanharzes eingesetzten Silane in großem Umfang Silane mit einem Gehalt an verschiedenen organischen Resten und mit verschiedener Funktionalität in einem geforderten Bereich engesetzt werden müssen. Nach dem erfindungsgemäßen Verfahren können somit mit geringerem Aufwand Organopolysiloxanharze mit verschiedenen Anteilen an SiC-gebundenen Vinylgruppen hergestellt werden.

Auch die erfindungsgemäß hergestellten Organopolysiloxanharze sind praktisch frei von Si-gebundenen Hydroxylgruppen.

Gegenstand der Erfindung ist ein Verfahren zur Herstellung von SiC-gebundene Vinylgruppen enthaltenden Organopolysiloxanharzen, dadurch gekennzeichnet, daß ein Gemisch aus (A) mindestens 0,1 Gewichtsprozent Si-gebundene Hydroxylgruppen enthaltendem Organopolysiloxan mit mindestens 50 Molprozent Monoorganosiloxaneinheiten, (B) Organosiloxan mit 2 bis 10 Siliciumatomen je Molekül, worin zumindest im wesentlichen alle anders als durch Siloxansauerstoffatome abgesättigten Siliciumvalenzen durch SiC-gebundene Kohlenwasserstoffreste abgesättigt sind, und durchschnittlich mindestens 2 solcher Kohlenwasserstoffreste je Si-Atom vorliegen, wobei zumindest einer der Reaktionsteilnehmer (A) und (B) durchschnittlich mindestens eine SiC-gebundene Vinylgruppe enthält, und (C) säureaktivierter Bleicherde auf 90 ± 5°C erwärmt wird, wobei während dieses Erwärmens durch Kondensation Si-gebundener Hydroxylgruppen freigewordenes Wasser im Reaktionsrückstand belassen wird, und nach dem Erwärmen Organopolysiloxan von der Bleicherde abgetrennt wird.

Die im Rahmen der Erfindung verwendeten Organopolysiloxane (A) können zusätzlich zu den Monoorganosiloxaneinheiten ($RSiO_{3/2}$; R = Kohlenwasserstoffrest) beispielsweise bis zu 50 Molprozent Diorganosiloxaneinheiten ($R_2SiO$, wobei R die vorstehend angegebene Bedeutung hat) und bis zu jeweils 10 Molprozent Triorganosiloxaneinheiten ($R_3SiO_{1/2}$, wobei R wieder die vorstehend angegebene Bedeutung hat) und/oder $SiO_{4/2}$-Einheiten enthalten. Die im Rahmen der Erfindung verwendeten Organopolysiloxane (A) können aber auch zusätzlich zu den Monoorganosiloxaneinheiten und gegebenenfalls mindestens einer Art der anderen vorstehend genannten Siloxaneinheiten z.B. $O_{3/2}SiCH_2CH_2SiO_{3/2}$-Einheiten enthalten.

Beispiele für SiC-gebundene Kohlenwasserstoffreste in den Organopolysiloxanen (A) und damit für Reste R in den oben angegebenen Formeln sind Alkylreste, wie der Methyl-, Äthyl-, n-Propyl- und Isopropylrest; Alkenylreste, wie der Vinylrest; und Arylreste, wie der Phenylrest. Insbesondere wegen der leichteren Zugänglichkeit sind vorzugsweise mindestens 80% der Anzahl der SiC-gebundenen Kohlenwasserstoffreste in den Organopolysiloxanen (A) Methylreste und höchstens 5% der Anzahl der SiC-gebundenen Kohlenwasserstoffreste in den Organopolysiloxanen (A) Phenylreste. Weiterhin ist es bevorzugt, daß die SiC-gebundenen Kohlenwasserstoffreste in Organopolysiloxan (A) alle frei von aliphatischen Mehrfachbindungen sind.

Die Organopolysiloxane (A) können beispielsweise durch Hydrolyse von mindestens einem Organosilan der allgemeinen Formel

$$RSiX_3,$$

wobei X gleiche oder verschiedene hydrolysierbare Gruppen, z.B. eine Äthoxygruppe, oder gleiche oder verschiedene hydrolysierbare Atome, insbesondere Chlor, bedeutet, und R die oben dafür angegebene Bedeutung hat, gegebenenfalls im Gemisch mit bis zu 50 Molprozent, bezogen auf die Gesamtmolmenge des jeweiligen Silangemisches, mindestens einem Organosilan der allgemeinen Formel

$$R_2SiX_2,$$

wobei R und X jeweils die oben dafür angegebene Bedeutung haben, und sowohl R als auch X gleich oder verschieden sein können, jeweils bis 10 Molprozent, bezogen auf die Gesamtmolmenge des jeweiligen Silangemisches, mindestens einem Organosilan der allgemeinen Formel

$$R_3SiX,$$

wobei R und X jeweils die oben dafür angegebene Bedeutung haben, und die Gruppen R gleich oder verschieden sein können, und/oder mindestens einem Silan der allgemeinen Formel

$$SiX_4,$$

wobei X die oben dafür angegebene Bedeutung hat und gleich oder verschieden sein kann, oder auch mindestens einem Silcarban der allgemeinen Formel

$$X_3SiCH_2CH_2SiX_3,$$

worin X die oben dafür angegebene Bedeutung hat und gleich oder verschieden sein kann, hergestellt werden.

Es kann nur eine Art von Organopolysiloxan (A) verwendet werden. Es können aber auch verschiedene Arten von Organopolysiloxanen (A) verwendet werden. Die Organopolysiloxane (A) enthalten meist mindestens 0,2 Gewichtsprozent Si-gebundene Hydroxylgruppen.

Die Organosiloxane (B) mit 2 bis 10 Siliciumatomen je Molekül, worin zumindest im wesentlichen alle anders als durch Siloxansauerstoffatome abgesättigten Siliciumvalenzen durch SiC-gebundene Kohlenwasserstoffreste abgesättigt sind, und durchschnittlich mindestens 2 solcher Kohlenwasserstoffreste je Si-Atom vorliegen, können linear, cyclisch oder verzweigt sein. Die oben angegebenen Beispiele für SiC-gebundene Kohlenwasserstoffreste in Organopolysiloxan (A) gelten im vollen Umfang auch für die Kohlenwasserstoffreste in Organopolysiloxan (B). Es ist jedoch bevorzugt, daß in mindestens 30% der Anzahl der Moleküle von Organopolysiloxan (B) mindestens 2 Vinylgruppen je Molekül vorliegen, wie in den Organosiloxanen der Formeln

$$CH_2{=}CH(CH_3)_2SiOSi(CH_3)_2CH{=}CH_2,$$

$$(CH_2{=}CH)_2CH_3SiOSiCH_3(CH{=}CH_2)_2,$$

$$[CH_2{=}CH(CH_3)SiO]_3,$$

$$[CH_2{=}CH(CH_3)SiO]_4,$$

$$Si[OSi(CH_3)_2CH{=}CH_2]_4,$$

$$CH_3Si[OSi(CH_3)_2CH{=}CH_2]_3,$$

$$CH_2{=}CH(CH_3)_2SiO[Si(CH_3)CH{=}CH_2O]_nSi(CH_3)_2CH{=}CH_2,$$

wobei n eine ganze Zahl im Bereich von 1 bis 10 ist.

Bevorzugt als Organopolysiloxan (B) mit Vinylgruppen ist 1,3-Divinyl-1,1,3,3-tetramethyldisiloxan.

Ein Beispiel für ein Organopolysiloxan (B), dessen Kohlenwasserstoffreste frei von aliphatischen Mehrfachbindungen sind und das insbesondere im Gemisch mit Vinylgruppen enthaltendem Organopolysiloxan (B) verwendet werden kann, ist Hexamethyldisiloxan.

Wie schon aus dem Vorstehenden ersichtlich, kann nur eine Art von Organosiloxan (B) verwendet werden. Es können aber auch verschiedene Arten von Organosiloxan (B) verwendet werden.

Vorzugsweise wird Organopolysiloxan (B) in Mengen von 2 bis 100 Gewichtsprozent, insbesondere 5 bis 50 Gewichtsprozent, jeweils bezogen auf das Gewicht von Organopolysiloxan (A), eingesetzt, mit der Maßgabe, daß die Menge der Triorganosiloxaneinheiten höchstens 15 Molprozent der Gesamtmenge an Siloxaneinheiten in Organopolysiloxan (A) und (B) beträgt. Je höher die Menge an Organosiloxan (B) und je größer der Anteil der Triorganosiloxaneinheiten in Organosiloxan (B) umso neidriger, z.B. 50 bis 2500 mPa·s bei 25°C, ist die Viskosität des schließlich erhaltenen Organopolysiloxanharzes.

Das bevorzugte Beispiel einer säureaktivierten Bleicherde (C) ist im Handel erhältlich und hat folgende Kenndaten:

| | |
|---|---|
| Schüttgewicht: | 450 g/l, |
| Rüttelgewicht: | 670 g/l, |
| Spezifisches Gewicht: | 2,4 kg/l, |
| Feuchtigkeitsgehalt (2 h, 110°C): | höchstens 7 Gewichtsprozent |

| | |
|---|---|
| Glühverlust (1000°C): | höchstens 7 Gewichtsprozent |
| pH in 10 gewichtsprozentiger wäßriger Suspension: | 2,9. |

Diese Bleicherde ist aus Siliciumdioxyd, Aluminiumoxyd, Eisen(III)-oxyd, Mangesiumoxyd, Natriumoxyd und Kaliumoxyd aufgebaut, und 97 Gewichtsprozent dieser Bleicherde gehen durch ein Sieb mit einer lichten Maschenweite von 150 Micrometer.

Zahlreiche weitere säureaktivierte Bleicherden sind unter einer Vielzahl von Bezeichnungen, wie "Terrana (registriertes Warenzeichen) L 80", "Tonsil (registriertes Warenzeichen) AC", "Clarit (registriertes Warenzeichen) Standard A", "Nordal" (registriertes Warenzeichen), "Filtrol (registriertes Warenzeichen) ultra" und "Rumsil" (registriertes Warenzeichen), im Handel erhältlich und ebenfalls für das erfindungsgemäße Verfahren geeignet.

Es kann nur eine Art von säureaktivierter Bleicherde verwendet werden. Es können aber auch verschiedene Arten von säureaktivierten Bleicherden verwendet werden.

Vorzugsweise wird säureaktivierte Bleicherde (C) in Mengen von 1 bis 5 Gewichtsprozent, bezogen auf das Gesamtgewicht der Stoffe (A) und (B), verwendet.

Das Erwärmen bei dem erfindungsgemäßen Verfahren wird, weil dies den geringsten Aufwand erfordert, vorzugsweise beim Druck der umgebenden Atmosphäre, also bei 1 bar etwa 1 bar, durchgeführt. Falls erwünscht, können aber auch höhere Drücke angewendet werden.

Die Dauer des Erwärmens bei dem erfindungsgemäßen Verfahren beträgt vorzugsweise 0,5 bis 2 Stunden.

Solange die Viskosität des schließlich erhaltenen Organopolysiloxanharzes höchstens 3000 mPa·s bei 25°C beträgt, wird es vorzugsweise als solches, also in unverdünnter Form, durch Filtrieren, z.B. mittels einer Filterpresse, von der Bleicherde abgetrennt. Hat das schließlich erhaltene Organopolysiloxan eine höhere Viskosität als 3000 mPa·s bei 25°C oder ist es bei Raumtemperatur sogar fest, so kann es vor dem Filtrieren in einem Lösungsmittel, wie Toluol und/oder Trichloräthylen, aufgenommen und nach dem Filtrieren das Lösungsmittel abdestilliert werden.

Die erfindungsmegäß hergestellten, SiC-gebundene Vinylgruppen enthaltenden Organopolysiloxanharze eignen sich z.B. zum Umhüllen für elektrische Isolierungen, zum Herstellen von Formkörpern, einschließlich der Herstellung von Löffeln für Zahnabdrücke, und zum Herstellen von Überzügen.

Die erfindungsgemäß hergestellten Organopolysiloxanharze können z.B. mittels peroxydischer Verbindungen oder durch Zugabe von Organopolysiloxan mit Si-gebundenem Wasserstoff und die Anlagerung von Si-gebundenem Wasserstoff an aliphatische Mehrfachbindung förderndem Katalysator, wie einem Reaktionsprodukt aus $H_2PtCl_6 \cdot 6H_2O$ und Cyclohexanon, in bekannter Weise gehärtet werden.

In den folgenden Beispielen beziehen sich alle Angaben von Prozentsätzen auf das Gewicht, soweit nichts anderes angegeben is.

## Beispiel 1

In einem Dreihalskolben, der mit eingeschliffenem Rührer einem Thermometer, das mit einer Temperaturregelvorrichtung verbunden ist, und Rückflußkühler ausgestattet ist, werden 600 g eines Organopolysiloxans aus 80 Molprozent Monomethylsiloxaneinheiten ($CH_2SiO_{3/2}$) und 20 Molprozent Dimethylsiloxaneinheiten mit einer Viskosität von 61000 mPa·s bei 25°C und 0,78% Si-gebundenen Hydroxylgruppen als Organopolysiloxan (A) mit 69 g 1,3-Divinyl-1,1,3,3-tetramethyldisiloxan als Organosiloxan (B) vermischt und auf 90°C erwärmt. Nachdem die Temperatur sich auf 90 ± 2°C gleichbleibend eingestellt hatte, wurden 17 g (etwa 2%, bezogen auf das Gesamtgewicht der beiden Organosiloxane) säureaktivierte Bleicherde mit den oben angegebenen Kennzahlen zugegeben. Das so erhaltene Gemisch wird eine Stunde bei 90 ± 2°C gerührt und dann im Volumenverhältnis von 1:1, mit Toluol verdünnt, filtriert und am Rotationsverdampfer bei 120°C Badtemperatur zunächst bei 12 mm Hg (abs.) und dann 1 Stunde im Ölpumpenvakuum von flüchtigen Bestandteilen befreit.

## Beispiel 2

Die in Beispiel 1 beschriebene Arbeitsweise wird wiederholt mit den Abänderungen, daß als Organosiloxan (b) anstelle der 69 g 1,3-Divinyl-1,1,3,3-tetramethyldisiloxan 75 g dieses Disiloxans und 60 g Hexamethyldisiloxan verwendet werden, und wegen der verhältnismäßig niedrigen Viskosität des schließlich erhaltenen Organopolysiloxans dieses im noch heißen Zustand ohne vorheriges Verdünnen filtriert wird, so daß auch anschließend keine flüchtigen Bestandteile abzudestillieren sind.

## Beispiel 3

Die in Beispiel 1 beschriebene Arbeitsweise wird wiederholt mit den Abänderungen, daß als Organopolysiloxan (A) anstelle der 600 g des Organopolysiloxans aus 80 Molprozent Monomethylsiloxaneinheiten und 20 Molprozent Dimethylsiloxaneinheiten mit einer Viskosität von 61000 mPa·s bei 25°C und 0,78% Si-gebundenen Hydroxylgruppen 480 g dieses Organopolysiloxans und 120 g

eines Organopolysiloxans aus 50 Molprozent Monomethylsiloxaneinheiten und 50 Molprozent Dimethylsiloxaneinheiten mit einer Viskosität von 1590 mPa·s bei 25°C und 0,49% Si-gebundenen Hydroxylgruppen verwendet werden, und wegen der verhältnismäßig niedrigen Viskosität des schließlich erhaltenen Organopolysiloxans dieses im noch heißen Zustand filtriert wird, ohne daß vorher verdünnt wurde.

Beispiel 4

Die in Beispiel 1 beschriebene Arbeitsweise wird wiederholt mit den Abänderungen, daß als Organopolysiloxan anstelle der 600 g des Organopolysiloxans aus 80 Molprozent Monomethylsiloxaneinheiten und 20 Molprozent Dimethylsiloxaneinheiten mit einer Viskosität von 61000 mPa·s bei 25°C und 0,78% Si-gebundenen Hydroxylgruppen 360 g dieses Organopolysiloxans und 240 g des Organopolysiloxans aus 50 Molprozent Monomethylsiloxaneinheiten und 50 Molprozent Dimethylsiloxaneinheiten mit einer Viskosität von 1590 mPa·s bei 25°C und 0,49% Si-gebundenen Hydroxylgruppen verwendet werden, und die Filtration des schließlich erhaltenen Organopolysiloxans wie bei den Beispielen 2 und 3 ohne vorheriges Verdünnen erfolgt.

Beispiel 5

Die in Beispiel 1 beschriebene Arbeitsweise wird wiederholt mit der Abänderung, daß 82 g 1,3-Divinyl-1,1,3,3-tetramethyldisiloxan anstelle der 60 g dieses Disiloxans verwendet werden.

Beispiel 6

Die in Beispiel 1 beschriebene Arbeitsweise wird wiederholt mit der Abänderung, daß 103 g 1,3-Divinyl-1,1,3,3-tetramethyldisiloxan anstelle der 69 g dieses Disiloxans verwendet werden.

Die gemäß den Beispielen 1 bis 6 hergestellten, Si-gebundene Vinylgruppen enthaltenden Organopolysiloxanharze enthalten alle weniger als 0,1% Si-gebundene Hydroxylgruppen. Die Viskositäten dieser Harze sind in der folgenden Tabelle angegeben:

TABELLE

| Beispiel | Viskosität mPa·s |
|---|---|
| 1 | 44000 |
| 2 | 2700 |
| 3 | 2500 |
| 4 | 910 |
| 5 | 8400 |
| 6 | 3600 |

**Patentansprüche**

1. Verfahren zur Herstellung von SiC-gebundene Vinylgruppen enthaltenden Organopolysiloxanharzen, dadurch gekennzeichnet, daß ein Gemisch aus (A) mindestens 0,1 Gewichtsprozent Si-gebundene Hydroxylgruppen enthaltendem Organopolysiloxan mit mindestens 50 Molprozent Monoorganosiloxaneinheiten, (B) Organosiloxan mit 2 bis 10 Siliciumatomen je Molekül, worin zumindest im wesentlichen alle anders als durch Siloxansauerstoffatome abgesättigten Siliciumvalenzen durch SiC-gebundene Kohlenwasserstoffreste abgesättigt sind, und durchschnittlich mindestens 2 solcher Kohlenwasserstoffreste je Si-Atom vorliegen, wobei zumindest einer der Reaktionsteilnehmer (A) und (B) durchschnittlich mindestens eine SiC-gebundene Vinylgruppe enthält, und (C) säureaktivierter Bleicherde auf 90 ± 5°C erwärmt wird, wobei während dieses Erwärmens durch Kondensation Si-gebundener Hydroylgruppen freigewordenes Wasser im Reaktionsgemisch belassen wird, und nach dem Erwärmen Organopolysiloxan von der Bleicherde abgetrennt wird.

2. Verfahren nach Anspruch 1, dadurch gekennzeichnet, daß die SiC-gebundenen Kohlenwasserstoffreste in Organopolysiloxan (A) alle frei von aliphatischen Mehrfachbindungen sind, und in mindestens 30% der Anzahl der Moleküle von Organopolysiloxan (B) mindestens 2 Vinylgruppen je Molekül vorliegen.

3. Verfahren nach Anspruch 1 und 2, dadurch gekennzeichnet, daß als Organosiloxan (B) 1,3-Divinyl-1,1,3,3-tetramethyldisiloxan verwendet wird.

4. Verfahren nach Anspruch 1 bis 3, dadurch gekennzeichnet, daß die säureaktivierte Bleicherde in Mengen von 1 bis 5 Gewichtsprozent, bezogen auf das Gesamtgewicht der Stoffe (A) und (B), verwendet wird.

**Revendications**

1. Procédé de préparation de résines de polyorganosiloxanes contenant des radicaux vinyles directement reliés au silicium, procédé caractérisé en ce qu'on chauffe à 90 ± 5°C un mélange constitué (A) d'un polyorganosiloxane contenant au moins 0,1% en poids de groupes hydroxy liés à Si et au moins 50% en moles de motifs monoorganosiloxanes, (B) d'un organosiloxane contenant de 2 à 10 atomes de silicium par molécule, dans lequel au moins essentiellement toutes les valences du silicium qui ne sont pas saturées par des atomes d'oxygène siloxaniques le sont par des radicaux hydrocarbonés directement liés au silicium et dans lequel il y a en moyenne au moins 2 radicaux hydrocarbonés de ce genre par atome de silicium, au moins l'un des partenaires réactionnels (A) et (B) contenant en moyenne au moins un radical vinyle directement relié au silicium, et (C) d'une terre décolorante activée par un acide, l'eau libérée au cours de ce chauffage par condensation de groupes hydroxy liés à Si étant laissée dans le mélange réactionnel, et, après le chauffage, on sépare le polyorganosiloxane de la terre décolorante.

2. Procédé selon la revendication 1, caractérisé en ce que les radicaux hydrocarbonés directement reliés au silicium dans le polyorganosiloxane (A) sont tous dépourvus de liaisons multiples aliphatiques, et, dans au moins 30% du nombre des molécules du polyorganosiloxane (B), il y a au moins 2 radicaux vinyles par molécule.

3. Procédé selon l'une des revendications 1 et 2, caractérisé en ce qu'on utilise, comme organosiloxane (B), le divinyl-1,3 tétraméthyl-1,1,3,3 disiloxane.

4. Procédé selon l'une quelconque des revendications 1 à 3, caractérisé en ce que la terre décolorante activée par un acide est utilisée en des quantités de 1 à 5% en poids par rapport au poids total des corps (A) et (B).

**Claims**

1. Process for the production of organopolysiloxane resins containing SiC-bonded vinyl groups, characterised in that a mixture of

(A) at least 0.1 per cent by weight of an organopolysiloxane containing Si-bonded hydroxyl groups and having at least 50 mole per cent of monoorganosiloxane units,

(B) an organosiloxane having from 2 to 10 silicon atoms per molecule, in which at least substantially all silicon valencies satisfied other than by siloxane oxygen atoms are satisfied by SiC-bonded hydrocarbon radicals and, on average, at least 2 such hydrocarbon radicals are present per Si atom,

wherein at least one of the reactants (A) and (B) contains, on average, at least one SiC-bonded vinyl group, and

(C) an acid-activated bleaching earth, is heated to 90 ± 5°C, wherein, during that heating operation, water released by condensation of the Si-bonded hydroxyl groups is allowed to remain in the reaction mixture, and after the heating operation, the organopolysiloxane is separated from the bleaching earth.

2. Process according to claim 1, characterised in that the SiC-bonded hydrocarbon radicals in the organopolysiloxane (A) are all free of aliphatic multiple bonds, and that, in at least 30% of the number of molecules of the organopolysiloxane (B), there are at least 2 vinyl groups per molecule.

3. Process according to claims 1 and 2, characterised in that 1,3-divinyl-1,1,3,3-tetramethyldisiloxane is used as organosiloxane (B).

4. Process according to claims 1 to 3, characterised in that the acid-activated bleaching earth is used in amounts of from 1 to 5 per cent by weight, based on the total weight of substances (A) and (B).